# EUROPEAN PATENT SPECIFICATION

(11) **EP 0 669 030 B1**
(45) Date of publication and mention of the grant of the patent: **25.08.1999**
(21) Application number: 93924883.7
(22) Date of filing: 08.11.1993
(51) Int. Cl.: G06F 17/60, G07G 1/14, A47F 10/02

(54) **SOLAR SWITCH**
SOLARSCHALTER
COMMUTATEUR SOLAIRE

(30) Priority: 13.11.1992 SE 9203412
(43) Date of publication of application: 30.08.1995
(73) Proprietor: Pricer AB, 754 51 Uppsala (SE)
(72) Inventor: AHLM, Roger, S-591 46 Motala (SE); NILSSON, Björn, S-752 63 Uppsala (SE); ÖDMARK, Ola, S-756 48 Uppsala (SE)
(74) Representative: Bjellman, Lennart Olov Henrik
(86) International application number: SE9300938
(87) International publication number: WO9411835

(56) References cited:
- EP-A- 0 396 414
- WO-A-90/13067

## Description

### Technical field

The present invention relates to information systems for displaying prices of articles on display units adjacent to the location of said articles at a point of sale. More particularly, the invention relates to a light switch for systems of the type having a number of detached displaying units, which reproduce the information stored in the respective unit, which information is changeable by a wireless communication from a central computer or from a portable terminal.

### Prior art and description of the invention

An example of a known system of this type is for example disclosed in the Swedish patent application 8405140-8 and the corresponding international patent application having a publication number WO 86/02477.

The European Patent Application EP-A2-0 396 414 discloses a price display system for a store. This system includes spread spectrum or ordinary broadcasting of UPC code and price data from a transmitter in the store to a large number of receivers. Each receiver is connected to one or more LCD displays attached to the store shelves, whereby the displays and receivers are battery powered.

Yet another document WO 90/13067 discloses a product pricing system for supermarket shelf labels comprising an electronic data transmission system which transmits pricing information to electronic shelf labels by modulating a data information in the electric supply to artificial lighting in the environment of the labels. The labels have a solar cell for providing operating power and a photodetector for detecting the data information signal in the artificial light. Each module further incorporates a re-chargeable battery.

A problem in connection with information systems of the above mentioned kind, wherein the display units are completely separated from the central control unit or computer, consists in being capable of assigning to a display unit a new identification, corresponding to the identity code of a certain merchandise. According to the invention, this problem is solved in a flexible and appropriate manner by the invention being realized according to the features specified in the appended claims.

Another problem, which is solved in connection with the present invention, relates to the possibility of utilizing the display units for information stored in the central computer other than the price information, which normally is to be displayed to the customer. It is not suitable to provide the display unit with push-buttons available for the general public to set the display unit to information of the type, which should be available exclusively to the staff. Instead, in the present invention, the problem has been solved by providing the display unit with an additional memory unit for information transmitted from the computer and then stored to be read by the staff at need. It is impossible to read this information on the display unit without knowing how to have it disclosed. According to the invention, the information is activated for display on the display by means of a wireless signal from a hand terminal or through a combination of actions affecting the display unit. The solution to the problem will become apparent through the description and the claims stated below.

The objects are achieved by a method according to claim 1 and a system according to claim 8.

By utilizing a temporary change in the output signal from the photoelectric converter, the problem of setting the mode of operation for the display unit without a mechanical switch has been given a particularly advantageous solution, which appear more clearly from the description below and in the claims.

Particularly advantageous embodiments of an information system having separate display units will be obtained if two or more of the solutions stated above are implemented within the same system. Although not interdependent, in combination they will provide such advantages, that a system highly adapted to its purpose and a most advantageous realization of the display units will be achieved. Another objective of the invention is thus to combine two or more of the solutions stated above.

### Description of the drawings

The invention will now be explained more in detail with reference to the drawings, wherein
- Figure 1: schematically shows a system of the invention,
- Figure 2: schematically shows the way a display unit can be constructed for reprogramming the identification code according to the invention, and
- Figure 3: schematically shows the way a display unit can be arranged to store further information in addition to identification and price information and the way the unit can be switched to display this information.

### Description of an exemplifying embodiment

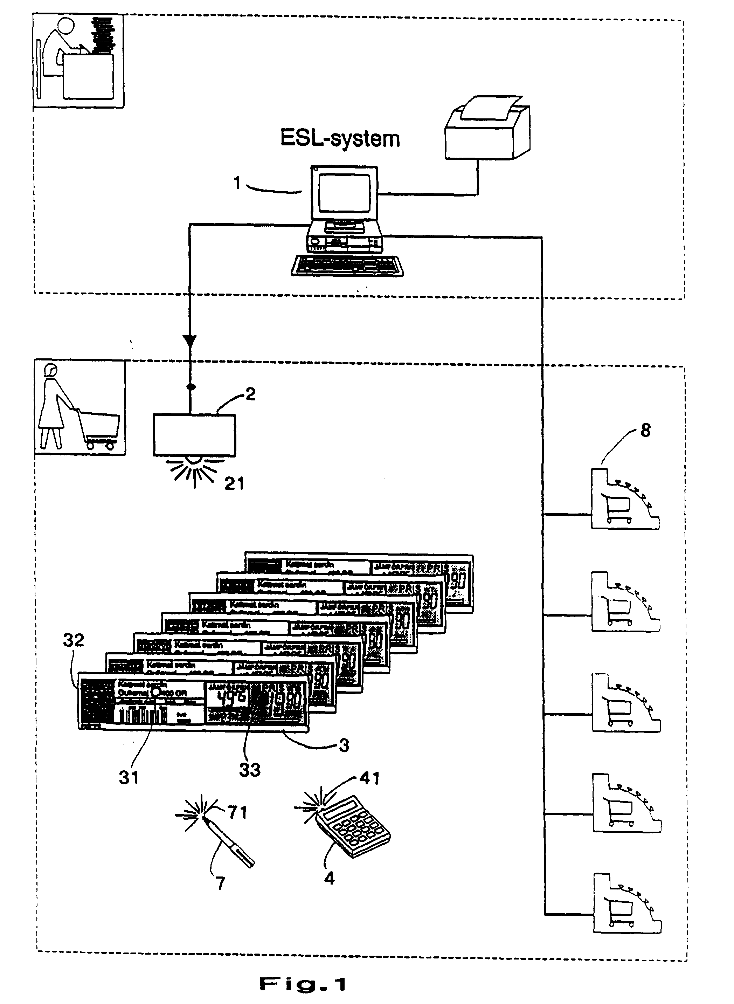

The system to which the present invention is applied being substantially based on the system of the patent document mentioned in the introduction, comprises, as shown in figure 1, a control unit 1, which can be a store computer to which the cash-register terminals 8 and, possibly, other terminals are connected in a well-known manner to store and register prices together with article identification. The control unit 1 is connected to a transmitter unit 2, which, according to a predetermined sequence, by means of a transmitter 21 transmits an output signal. The transmitter 21 may preferably consist of diodes emitting infrared light, but may optionally consist of another suitable wireless information transmitter. A display unit 3 comprises, when seen from the outside, a receiver 31 of the wireless information, a photoelectric converter unit 32 for power supply and a display 33, which units are connected to other built-in components to store information received by the receiver 31 and to display stored information on the display 33. The display unit 3 is arranged in a well-known manner to exclusively store received information of the type, that possesses an address portion corresponding to the relevant display unit and that satisfies, in other aspects, the display unit built-in check functions in the form of check sums etc. Only a few display units 3 are shown in figure 1, but normally, however, a large number of display units are arranged, each of those having its own address code, which is individually programmed prior to use. In a large store, the number may reach several thousands, which are controllable from a single control unit 1 having one or more transmitters 21. A hand terminal 4 having a transmitter 41 or a light pen 7 normally used when only one display unit is to be rearranged can be used optionally to change parameters in a display unit, e.g. to initiate the identification code of the display unit.

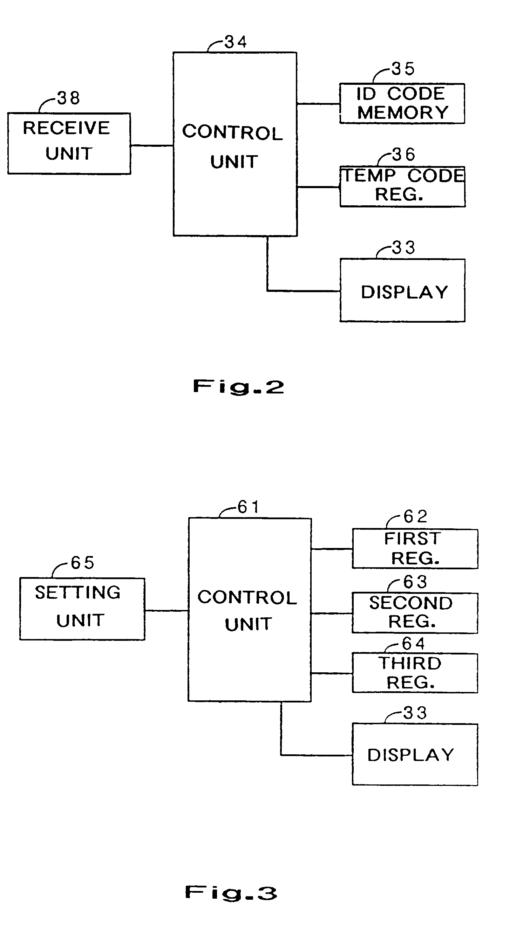

As schematically indicated in figure 2, the display unit is functionally designed, so that an identification code initially can be stored in a memory or register 35. The identification code is utilized, so that the identification code of a received signal, which from the receiving unit 38 is temporarily stored by the control unit 34 in a code register 36, is compared with the stored one, and, should a correspondence exist, received values will be stored instead of the previously stored ones, this is realized by means of conventional technique. Before any identification code has been stored in a display unit, it is not possible to access it from the control unit. According to the invention, a hand terminal is therefore utilized to initiate a display unit and to store its identification code. This method is realized as follows. Initially, the display unit is set to receive and store a new identification code by switching the control unit of the display unit to a state of initiation. This switching may be realized in different ways. The simplest way is to provide the display unit with a kind of switch, which is affected by a push-button on the display unit. This is not a good solution, since visible push-buttons on the display unit constitute an encouragement of unnecessary manipulation thereon, possibly leading to wear and improper displaying. According to an embodiment of the present invention, the display unit is thus provided with a hidden switch for the switching to the state of initiation. This switch is preferably disposed behind the photoelectric cell 32 of the display unit, so as to be influenced by pushing the cell 32. In order to avoid unintentional influence, the control unit may be arranged in a manner to sense a certain number, e.g. three operations of the switch prior to the switching of the control unit to a state of initiation. As an alternative, a delay circuit may be arranged in such a way, that the control unit switches only after that the switch is being operated for a certain period of time.

An essential function of the display unit is constituted by the return from the state of initiation to the normal state. The display unit is preferably arranged so that this return is realized automatically directly upon the reception of a new identification code or, provided no such code is received, after a predetermined period of time, e.g. approximately one minute.

This prevents a plurality of display units from simultaneously receiving the same identification code.

There is also an alternative method of setting the control unit to the state of initiation or another state or to another mode of operation functionally differing from the normal position. This method has the advantage of not having to utilize any mechanically operated switch. Instead, a particular circuit is connected to the photoelectric converter or solar cell of the display unit, so that the control unit receives a switching signal when the solar cell is exposed to lighting again after having been blocked for a short period of time. This switching signal may be achieved by covering the solar cell for a short moment. The short-term drop of its output voltage followed by a rise, can provide the switching signal by means of a suitable electronic circuit of a wellknown type. If then the control unit has been set for the state of initiation, the address information will have to be transmitted within a predetermined period of time, prior to the control unit resetting again for the normal state.

Irrespective of which of the above-mentioned methods is utilized, the reprogramming of the identification code is preferably achieved by reading of the code on the article, to which the display unit is to relate, by means of a hand terminal or a light pen and that the hand terminal is set to transmit a signal to the display unit when its control unit has been initiated for receiving. The signal to the display unit constituting the identification code is preferably composed by the article code and further code elements, which are unique to the system and the installation in question.

At this time, the invention has only been indicated schematically. It is however obvious that a person skilled in the art will be able to realize this in different ways by utilizing generally well-known components or components specially designed for this purpose.

Figure 3 schematically shows the way additional information may be arranged to be received and stored in the display module in order to be displayed on the display upon switching. Thus, three memories or registers are connected to the control unit 61 of the display module, the first register 62 normally containing the identification code, the second register 63 the price information and the third register 64 other information regarding the present article, which information has been stored in the control unit 1 (Figure 1) and transmitted to the display unit together with the price information. Here, this may relate to such product information which may be needed by the staff being in the store, e.g. data about the quantity of an article to be kept in stock, the quantity normally to be ordered or other information of a similar kind. The information in the third register is normally not displayed on the display 33 unless the control unit first has received a particular signal from a setting unit 65. This signal, which must not be initiated by customers, may be realized by the staff in alternative ways depending on the structure of the setting unit. As specified above in connection with the description of the initiation of the identification code, the corresponding means may be used for this setting, only not exactly the same means and function for both. Thus, for instance, may be utilized a signal from a hand terminal, or the influence of a hidden switch or a certain influence of the photoelectric converter.

The invention has now been described functionally in detail with reference to drawings relating to embodiments. The more detailed realization can be achieved by a technique, which is well-known to a person skilled in the electronic art. The possibility of an arbitrary combination of the different embodiments in order to produce an efficient and appropriate system is also intended to lie within the scope of the invention.

## Claims

1. A method for changing mode of operation in a price display unit (3) including a receiver (31) for receiving address and price information and additional information, a first memory (35) for storing address information and a second memory (36) for storing price information, **characterized by** the steps:
operating said price display unit (3), comprising a solar cell (32) for providing power to said price display unit, in a first mode of operation; and
manipulating said solar cell (32) thereby changing the mode of operation of said price display unit (3) from said first mode of operation to a second mode of operation.

2. The method according to claim 1, **characterized in that** said manipulating step includes obscuring said solar cell (32) for a period of time.

3. The method according to claim 1, **characterized in that** said manipulating step includes pressing said solar cell (32).

4. The method according to claim 1, **characterized by** the further step of resetting the mode of operation of said price display unit (3) to said first mode of operation after a predetermined period of time.

5. The method according to claim 1, **characterized by** the further step of setting the price display unit (3) in said second mode of operation for receiving and storing new address information.

6. The method according to claim 4, **characterized by** the further step of immediately resetting said price display unit (3) in said first mode of operation when new address information has been received by said price display unit.

7. Tne method according to claim 5, **characterized by** the further step of changing the price display unit (3) to yet another mode of operation for displaying additional information stored in a third memory (64).

8. A price display unit (3) comprising
a price display (33);
a control unit (34) electrically connected to said price display;
a receiver (38) electrically connected to said control unit (34) for receiving address information and price information,
one of a first memory and a first register (35) electrically connected to said control unit for storing said address information;
one of a second memory and a second register (36) electrically connected to said control unit for storing said price information;
**characterized by**
a solar cell (32) providing power to said price display unit and electrically connected to said control unit; and
means, connected to said solar cell (32) and said control unit (34), for changing the mode of operation of said control unit from a first mode of operation to a second mode of operation by manipulation of said solar cell.

9. The price display unit according to claim 8, **characterized in that** said means for changing the mode of operation is a mode changing circuit actuated by obscuring said solar cell (32) for a period of time.

10. The price display unit according to claim 8, **characterized in that** said means for changing the mode of operation is a mode changing circuit actuated by pressing said solar cell (32).

11. The price display unit according to claim 8, **characterized in that** said means for changing the mode of operation is reset after a predetermined period of time.

12. The price display unit according to claim 8, **characterized in that** said price display unit further comprises means for receiving address information upon the change of mode of operation from a first mode of operation to a second mode of operation.

13. The price display unit according to claim 12, **characterized in that** the price display unit is adapted to immediately reset the mode of operation when new address information has been received.

14. The price display unit according to claim 12, **characterized in that** additional information stored in a third memory (64) is displayed when said control unit receives a particular signal from a setting unit (65).

## Patentansprüche

1. Verfahren zum Wechsel der Betriebsart bei einer Preisanzeigeeinheit (3) mit einem Empfänger (31) zum Empfangen von Adressen- und Preisinformationen und zusätzlichen Informationen, mit einem ersten Speicher (35) zum Speichern von Adresseninformationen und mit einem zweiten Speicher (36) zum Speichern von Preisinformationen, gekennzeichnet durch die Schritte:
Betreiben der Preisanzeigeeinheit (3), die eine Solarzelle (32) zur Leistungsversorgung der Preisanzeigeeinheit aufweist, in einer ersten Betriebsart, und
Manipulieren der Solarzelle (32), wodurch die Betriebsart der Preisanzeigeeinheit (3) von einer ersten Betriebsart in eine zweite Betriebsart gewechselt wird.

2. Verfahren nach Anspruch 1, **dadurch gekennzeichnet**, daß der Schritt des Manipulierens das Abdecken der Solarzelle (32) für ein Zeitintervall umfaßt.

3. Verfahren nach Anspruch 1, **dadurch gekennzeichnet**, daß der Schritt des Manipulierens das Drücken der Solarzelle (32) umfaßt.

4. Verfahren nach Anspruch 1, gekennzeichnet durch den weiteren Schritt des Zurücksetzens der Betriebsart der Preisanzeigeeinheit (3) auf die erste Betriebsart nach einem vorbestimmten Zeitintervall.

5. Verfahren nach Anspruch 1, gekennzeichnet durch den weiteren Schritt des Einstellens der Preisanzeigeeinheit (3) in die zweite Betriebsart zum Empfangen und Speichern von neuen Adresseninformationen.

6. Verfahren nach Anspruch 4, gekennzeichnet durch den weiteren Schritt des sofortigen Zurücksetzens der Preisanzeigeeinheit (3) in die erste Betriebsart, wenn neue Adresseninformationen von der Preisanzeigeeinheit empfangen worden sind.

7. Verfahren nach Anspruch 5, gekennzeichnet durch den weiteren Schritt des Wechsels der Preisanzeigeeinheit (3) in eine noch andere Betriebsart zum Anzeigen von zusätzlichen Informationen, die in einem dritten Speicher (64) gespeichert sind.

8. Preisanzeigeeinheit (3), mit
einer Preisanzeige (33),
einer Steuereinheit (34), die elektrisch an die Preisanzeige angeschlossen ist,
einem Empfänger (38), der elektrisch an die Steuereinheit (34) angeschlossen und zum Empfangen von Adresseninformationen und Preisinformationen vorgesehen ist,
einem ersten Speicher und einem ersten Register (35), die elektrisch an die Steuereinheit angeschlossen und zum Speichern von den Adresseninformationen vorgesehen sind,
einem zweiten Speicher und einem zweiten Register (36), die elektrisch an die Steuereinheit angeschlossen und für das Speichern der Preisinformationen vorgesehen sind,
gekennzeichnet durch
eine Solarzelle (32), die die Preisanzeigeeinheit mit Leistung versorgt, und die elektrische an die Steuereinheit angeschlossen ist, und
Mittel, die an die Solarzelle (32) und die Steuereinheit (34) angeschlossen und zum Wechseln der Betriebsart der Steuereinheit von einer ersten Betriebsart in eine zweite Betriebsart durch Manipulieren der Solarzelle vorgesehen sind.

9. Preisanzeige einer nach Anspruch 8, **dadurch gekennzeichnet**, daß die Mittel zum Wechseln der Betriebsart ein betriebsartenwechselnder Schaltkreis sind, der durch Abdecken der Solarzelle (32) für ein Zeitintervall betätigt wird.

10. Preisanzeige einer nach Anspruch 8, **dadurch gekennzeichnet**, daß die Mittel zum Wechseln der Betriebsart ein betriebsartenwechselnder Schaltkreis sind, der durch Drücken der Solarzelle (32) betätigt wird.

11. Preisanzeige einer nach Anspruch 8, **dadurch gekennzeichnet**, daß die Mittel zum Wechseln der Betriebsart nach einem vorgegebenen Zeitintervall zurückgesetzt werden.

12. Preisanzeige einer nach Anspruch 8, **dadurch gekennzeichnet**, daß die Preisanzeigeeinheit weiterhin Mittel zum Empfangen von Adresseninformationen aufgrund des Wechselns der Betriebsart von einer ersten Betriebsart in eine zweite Betriebsart aufweist.

13. Preianzeigeeinheit nach Anspruch 12, **dadurch gekennzeichnet**, daß die Preisanzeigeeinheit derart ausgebildet ist, daß die Betriebsart sofort zurückgesetzt wird, wenn neue Adresseninformationen empfangen worden sind.

14. Preisanzeigeeinheit nach Anspruch 12, **dadurch gekennzeichnet**, daß zusätzliche zusätzliche Informationen, die in einem dritten Speicher (64) gespeichert sind, angezeigt werden, wenn die Steuereinheit ein bestimmtes Signal von einer Einstelleinheit (65) empfängt.

## Revendications

1. Procédé de changement du mode de fonctionnement d'une unité d'affichage de prix (3) incluant un récepteur (31) pour recevoir des informations d'adresse et de prix et des informations additionnelles, une première mémoire (35) pour stocker les informations d'adresse et une deuxième mémoire (36) pour stocker les informations de prix, caractérisé par les étapes de :
commande de ladite unité d'affichage de prix (3), comprenant une pile solaire (32) pour la fourniture d'énergie à ladite unité d'affichage de prix, dans un premier mode de fonctionnement ; et
manipulation de ladite pile solaire (32) de façon à changer le mode de fonctionnement de ladite unité d'affichage de prix (3) dudit premier mode de fonctionnement à un deuxième mode de fonctionnement.

2. Procédé selon la revendication 1, caractérisé en ce que ladite étape de manipulation comprend l'occultation de ladite pile solaire (32) pendant un certain temps.

3. Procédé selon la revendication 1, caractérisé en ce que ladite étape de manipulation comprend la pression sur ladite pile solaire (32).

4. Procédé selon la revendication 1, caractérisé par l'étape supplémentaire de retour du mode de fonctionnement de ladite unité d'affichage de prix (3) audit premier mode de fonctionnement après un laps de temps prédéterminé.

5. Procédé selon la revendication 1, caractérisé par l'étape supplémentaire d'établissement de l'unité d'affichage de prix (3) dans ledit deuxième mode de fonctionnement pour recevoir et stocker de nouvelles informations d'adresse.

6. Procédé selon la revendication 4, caractérisé par l'étape supplémentaire de retour immédiat de la dite unité d'affichage de prix (3) audit premier mode de fonctionnement lorsque de nouvelles informations d'adresse ont été reçues par ladite unité d'affichage de prix.

7. Procédé selon la revendication 5, caractérisé par l'étape supplémentaire de changement de l'unité d'affichage de prix (3) à encore un autre mode de fonctionnement pour afficher des informations additionnelles stockées dans une troisième mémoire (64).

8. Unité d'affichage de prix (3) comprenant :
un affichage de prix (33) ;
une unité de commande (34) électriquement connectée audit affichage de prix ;
un récepteur (38) électriquement connecté à ladite unité de commande (34) pour recevoir des informations d'adresse et des informations de prix ;
l'un d'une première mémoire et d'un premier registre (35) électriquement connecté à ladite unité de commande pour stocker lesdites informations d'adresse ; et
l'un d'une deuxième mémoire et d'un deuxième registre (36) électriquement connecté à ladite unité de commande pour stocker lesdites informations de prix ;
caractérisée par :
une pile solaire (32) fournissant l'énergie à ladite unité d'affichage de prix et électriquement connectée à ladite unité de commande ; et
des moyens, connectés à ladite pile solaire (32) et à ladite unité de commande (34),pour changer le mode de fonctionnement de ladite unité de commande, d'un premier mode de fonctionnement à un deuxième mode de fonctionnement, par manipulation de ladite pile solaire.

9. Unité d'affichage de prix selon la revendication 8, caractérisée en ce que lesdits moyens pour changer le mode de fonctionnement sont un circuit de changement de mode activé par occultation de ladite pile solaire (32) pendant un certain laps de temps.

10. Unité d'affichage de prix selon la revendication 8, caractérisée en ce que lesdits moyens de changement du mode de fonctionnement sont un circuit de changement de mode activé par pression sur ladite pile solaire (32).

11. Unité d'affichage de prix selon la revendication 8, caractérisée en ce que lesdits moyens de changement du mode de fonctionnement sont ramenés à l'état initial après un laps de temps prédéterminé.

12. Unité d'affichage de prix selon la revendication 8, caractérisée en ce que ladite unité d'affichage de prix comprend en outre des moyens de réception d'informations d'adresse lors du changement de mode de fonctionnement, d'un premier mode de fonctionnement à un deuxième mode de fonctionnement.

13. Unité d'affichage de prix selon la revendication 12, caractérisée en ce que l'unité d'affichage de prix est prévue pour revenir immédiatement au mode de fonctionnement lorsque les nouvelles informations d'adresse ont été reçues.

14. Unité d'affichage de prix selon la revendication 12, caractérisée en ce que des informations additionnelles stockées dans une troisième mémoire (64) sont affichées lorsque la dite unité de commande reçoit un signal particulier d'une unité de positionnement (65).
